# FASCICULE DE BREVET EUROPEEN

(11) **EP 4 399 470 B1**
(45) Date de publication et mention de la délivrance du brevet: **13.05.2026**
(21) Numéro de dépôt: 22773227.8
(22) Date de dépôt: 05.09.2022
(51) Int. Cl.: F28D 9/00

(54) **MODULE DE TRAITEMENT THERMIQUE AVEC ORGANE DE DETENTE**
WÄRMEBEHANDLUNGSMODUL MIT EXPANSIONSGLIED
HEAT-TREATMENT MODULE WITH EXPANSION MEMBER

(30) Priorité: 06.09.2021 FR 2109328
(43) Date de publication de la demande: 17.07.2024
(73) Titulaire: Valeo Electrification, 95892 Cergy Pontoise (FR)
(72) Inventeur: TISSOT, Julien, 78322 Le Mesnil-Saint-Denis Cedex (FR); AZZOUZ, Kamel, 78322 Le Mesnil-Saint-Denis Cedex (FR); NACER BEY, Moussa, 78322 Le Mesnil-Saint-Denis Cedex (FR); GUERRA, Julio, 78322 Le Mesnil-Saint-Denis Cedex (FR)
(74) Mandataire: Valeo Powertrain Systems
(86) Numéro de dépôt international: PCT/EP2022/074655
(87) Numéro de publication internationale: WO 2023/031470

(56) Documents cités:
- US-A1- 2016 375 745
- US-A1- 2018 135 916
- US-A1- 2019 047 373

## Description

La présente invention se rapporte au domaine des systèmes de traitement thermique au sein d'un véhicule et porte plus particulièrement sur un module de traitement thermique au sein de tels systèmes de traitement thermique. Un module de traitement thermique selon le préambule de la revendication 1 est décrit dans le document US 2016375745 A1.

Les véhicules automobiles sont couramment équipés d'un circuit de fluide réfrigérant et d'au moins un circuit de liquide caloporteur, tous deux utilisés pour participer à un traitement thermique de différentes zones ou différents composants du véhicule. Il est notamment connu d'utiliser le circuit de fluide réfrigérant et/ou le circuit de liquide caloporteur pour traiter thermiquement un flux d'air envoyé dans un habitacle du véhicule équipé d'un tel circuit. Dans une autre application de ce circuit, il est connu d'utiliser le circuit de liquide caloporteur pour refroidir des composants de la chaîne de traction du véhicule, tel que par exemple un dispositif de stockage électrique, ce dernier étant utilisé pour fournir une énergie à un moteur électrique capable de mettre en mouvement le véhicule. Le système de traitement thermique fournit ainsi l'énergie capable de refroidir le dispositif de stockage électrique pendant son utilisation.

Le fluide réfrigérant et le liquide caloporteur circulent au sein de leur circuit respectif et interagissent entre eux par le biais d'une pluralité d'échangeurs thermiques assurant un échange de calories entre les deux fluides suscités. Afin d'améliorer la compacité du système de traitement thermique, plusieurs de ces échangeurs thermiques peuvent être regroupés en un module de traitement thermique. Les constructeurs automobiles étant dans une optique d'amélioration continuelle de leurs véhicules, un objectif d'amélioration de tels modules de traitement thermique est de regrouper davantage d'éléments du système de traitement thermique au sein des modules de traitement thermique.

La présente invention s'inscrit dans ce contexte en proposant un module de traitement thermique pour système de traitement thermique d'un véhicule selon la revendication 1. 1

Un tel module de traitement thermique selon l'invention permet ainsi de regrouper un organe de détente et trois échangeurs assurant un échange de chaleur soit entre le fluide réfrigérant et le liquide caloporteur, soit au sein même d'un circuit de fluide réfrigérant comme c'est le cas pour l'échangeur de chaleur interne. Une telle configuration permet ainsi d'intégrer l'organe de détente au module de traitement thermique, ce qui évite la mise en place d'un organe de détente à distance du module de traitement thermique, ainsi que des conduites devant relier cet organe de détente au module de traitement thermique.

Le premier échangeur thermique et le deuxième échangeur thermique assurent un échange thermique entre le fluide réfrigérant et le liquide caloporteur, et ce afin d'assurer plusieurs fonctions dépendantes d'une température du fluide réfrigérant. A titre d'exemple, au sein de ces échangeurs thermiques, le liquide caloporteur peut condenser le fluide réfrigérant afin de faciliter sa détente via l'organe de détente par la suite. Selon d'autres exemples, le fluide réfrigérant peut refroidir le liquide caloporteur afin que ce dernier assure soit une fonction de traitement thermique des composants de la chaîne de traction du véhicule, soit le refroidissement de l'air dans l'habitacle via l'HVAC.

L'échangeur de chaleur interne est propre au circuit de fluide réfrigérant. Autrement dit, l'échangeur de chaleur interne permet un échange de chaleur entre deux niveaux de température du fluide réfrigérant afin d'opérer une régulation thermique du fluide réfrigérant et ainsi d'optimiser les performances thermiques du circuit de fluide réfrigérant.

L'organe de détente est mécaniquement solidarisé au moins aux deux échangeurs thermiques afin de l'intégrer au module de traitement thermique. En fonction d'un mode de réalisation du module de traitement thermique, l'organe de détente assure une connexion fluidique entre les deux échangeurs thermiques, ou entre l'un des échangeurs thermiques et l'échangeur de chaleur interne.

Selon une caractéristique de l'invention, le premier échangeur thermique comprend une première passe configurée pour être parcourue par le fluide réfrigérant et une deuxième passe configurée pour être parcourue par le liquide caloporteur, le deuxième échangeur thermique comprenant un premier passage configuré pour être parcouru par le fluide réfrigérant et un deuxième passage configuré pour être parcouru par le liquide caloporteur, l'échangeur de chaleur interne comprenant un premier canal configuré pour être parcouru par le fluide réfrigérant à une première température et un deuxième canal configuré pour être parcouru par le fluide réfrigérant à une deuxième température différente de la première température.

La température du fluide réfrigérant varie en fonction de la pression et de l'état thermodynamique de fluide. Les termes première température et deuxième température ne désignent donc pas ici des températures au sens physique, mais plutôt un premier niveau de température et un deuxième niveau de température.

L'échange de chaleur opéré au sein du premier échangeur thermique se fait donc entre le fluide réfrigérant circulant dans la première passe et le liquide caloporteur circulant dans la deuxième passe. Cet échange de chaleur peut avoir pour but de condenser le fluide réfrigérant afin de faciliter sa détente au niveau de l'organe de détente par la suite.

Tout comme pour le premier échangeur thermique, l'échange de chaleur se déroulant dans le deuxième échangeur thermique se fait entre le fluide réfrigérant circulant dans le premier passage et le liquide caloporteur circulant dans le deuxième passage. Cet échange de chaleur peut être opéré entre le liquide caloporteur et le fluide réfrigérant détendu afin de refroidir le liquide caloporteur pour que ce dernier puisse par la suite refroidir les composants de la chaine de traction du véhicule.

L'échangeur de chaleur interne est configuré pour opérer un échange de chaleur entre le fluide réfrigérant circulant dans le premier canal et le fluide réfrigérant circulant dans le deuxième canal. Tel que cela a été décrit précédemment, cet échange de chaleur opéré au sein de l'échangeur de chaleur interne permet d'optimiser la régulation thermique du fluide réfrigérant. C'est la différence de température entre la première température et la deuxième température qui permet la bonne opération de cet échange de chaleur.

Selon une caractéristique de l'invention, au moins la première passe du premier échangeur thermique et au moins le premier canal de l'échangeur de chaleur interne forment une première section configurée pour faire circuler le fluide réfrigérant à la première température. La première section s'étend entre l'entrée de fluide réfrigérant du module de traitement thermique, jusqu'à l'organe de détente. La première section correspond ainsi à la section où le fluide réfrigérant circule à la température la plus élevée, qui correspond à la première température.

Le premier échangeur thermique peut ainsi permettre à la fois de condenser le fluide réfrigérant pour faciliter sa détente, et éventuellement de chauffer le liquide caloporteur afin que ce dernier assure une fonction de chauffage de l'habitacle dans le cas où le système de traitement thermique associé présente une configuration de type pompe à chaleur indirecte.

L'échangeur de chaleur interne permet également de refroidir le fluide réfrigérant circulant à la première température grâce à un échange de chaleur effectué avec le fluide réfrigérant circulant à la deuxième température.

Selon une caractéristique de l'invention, au moins le premier passage du deuxième échangeur thermique et au moins le deuxième canal de l'échangeur de chaleur interne forment une deuxième section configurée pour faire circuler le fluide réfrigérant à la deuxième température. La deuxième section est ainsi agencée entre l'organe de détente et une sortie du module de traitement thermique et assure la circulation du fluide réfrigérant à basse température, correspondant à la deuxième température. La circulation dans le premier passage permet ainsi de refroidir le liquide caloporteur circulant dans le deuxième passage. Le liquide caloporteur refroidi circule par la suite hors du module de traitement thermique afin de refroidir les composants de la chaine de traction du véhicule. Le fluide réfrigérant circulant dans la deuxième section circule également au sein du deuxième canal de l'échangeur de chaleur interne, afin de participer à l'échange de chaleur se déroulant dans l'échangeur de chaleur interne tel qu'évoqué précédemment.

Selon une caractéristique de l'invention, l'organe de détente sépare la première section de la deuxième section au sein du module de traitement thermique. L'organe de détente assure une détente du fluide réfrigérant correspondant à une diminution de la pression. Cette diminution de pression s'accompagne d'une diminution de la température. C'est donc l'organe de détente qui permet de faire varier la température du fluide réfrigérant de la première température vers la deuxième température et qui sépare ainsi la première section de la deuxième section.

Selon l'invention, le premier échangeur thermique et le deuxième échangeur thermique comprennent chacun un bloc d'échange de chaleur au bout duquel est disposé une paroi supérieure pour le premier échangeur thermique et une face supérieure pour le deuxième échangeur thermique, l'organe de détente étant disposé au niveau de la paroi supérieure du premier échangeur thermique et/ou de la face supérieure du deuxième échangeur thermique, la paroi supérieure du premier échangeur thermique et la face supérieure du deuxième échangeur thermique étant agencées à l'opposé de l'échangeur de chaleur interne par rapport au bloc d'échange de chaleur d'au moins l'un des échangeurs thermiques. Le bloc d'échange de chaleur correspond à une zone structurelle de chacun des échangeurs thermiques au sein duquel se déroule l'échange de chaleur qui lui est propre. L'organe de détente est quant à lui agencé de sorte à être mécaniquement lié à la fois à la paroi supérieure du premier échangeur thermique et à la face supérieure du deuxième échangeur thermique. Les deux échangeurs thermiques peuvent par exemple être au contact de l'échangeur de chaleur interne, la paroi supérieure du premier échangeur thermique et la face supérieure du deuxième échangeur thermique correspondant à la partie opposée par rapport au bloc d'échange de chaleur. Selon une caractéristique de l'invention, le premier échangeur thermique comprend une passe additionnelle, l'organe de détente assurant une connexion fluidique directe entre la passe additionnelle du premier échangeur thermique et le premier passage du deuxième échangeur thermique. La passe additionnelle permet de connecter fluidiquement le premier canal de l'échangeur de chaleur interne à l'organe de détente, et ce en traversant le premier échangeur thermique via la passe additionnelle. Contrairement à la première passe, il n'y a pas d'échange de chaleur opéré avec le fluide réfrigérant circulant dans la passe additionnelle. Cette dernière permet ainsi une connexion entre le premier canal de l'échangeur de chaleur interne et le premier passage du deuxième échangeur thermique en passant par l'organe de détente.

Selon une caractéristique de l'invention, l'organe de détente est soudé au premier échangeur thermique et au deuxième échangeur thermique. Cette caractéristique peut correspondre à l'ensemble des modes de réalisation du module de traitement thermique selon l'invention. Le soudage peut par exemple consister en un brasage de l'organe de détente sur les échangeurs thermiques. L'organe de détente peut également être solidarisé aux échangeurs thermiques d'une autre manière, par exemple par vissage.

Selon une caractéristique de l'invention, l'échangeur de chaleur interne s'inscrit dans une projection sur un plan perpendiculaire à un axe d'empilement des plaques, une projection sur le plan perpendiculaire à l'axe d'empilement des plaques d'un ensemble formé du premier échangeur thermique et du deuxième échangeur thermique étant compris dans la projection de l'échangeur de chaleur interne. Intégrer les plans de projection des échangeurs thermiques au sein du plan de projection de l'échangeur de chaleur interne permet de conserver au moins deux dimensions du module de traitement thermique égales aux dimensions de l'échangeur de chaleur interne. Une telle configuration renforce la compacité du module de traitement thermique.

Selon une caractéristique de l'invention, le deuxième échangeur thermique comprend un passage additionnel connectant fluidiquement le deuxième canal de l'échangeur de chaleur interne et la sortie du module de traitement thermique. Comme dans le cas de la passe additionnelle, il n'y'a pas d'échange de chaleur opéré avec le fluide réfrigérant circulant dans le passage additionnel.

Selon une caractéristique de l'invention, le premier échangeur thermique comprend une passe supplémentaire connectant fluidiquement le deuxième canal de l'échangeur de chaleur interne et la sortie du module de traitement thermique. Comme dans le cas de la passe additionnelle, il n'y'a pas d'échange de chaleur opéré avec le fluide réfrigérant circulant dans la passe supplémentaire.

Les caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :
[fig 1] représente un premier mode de réalisation d'un module de traitement thermique selon l'invention,
[fig 2] représente un premier exemple d'une circulation d'un fluide réfrigérant et d'un liquide caloporteur au sein du premier mode de réalisation du module de traitement thermique,
[fig 3] représente un deuxième exemple de la circulation du fluide réfrigérant et du liquide caloporteur au sein du premier mode de réalisation du module de traitement thermique,
[fig 4] représente un deuxième mode de réalisation du module de traitement thermique selon l'invention,
[fig 5] représente une première partie de la circulation du fluide réfrigérant au sein du deuxième mode de réalisation du module de traitement thermique non conforme à l'invention,
[fig 6] représente une deuxième partie de la circulation du fluide réfrigérant au sein du deuxième mode de réalisation du module de traitement thermique.

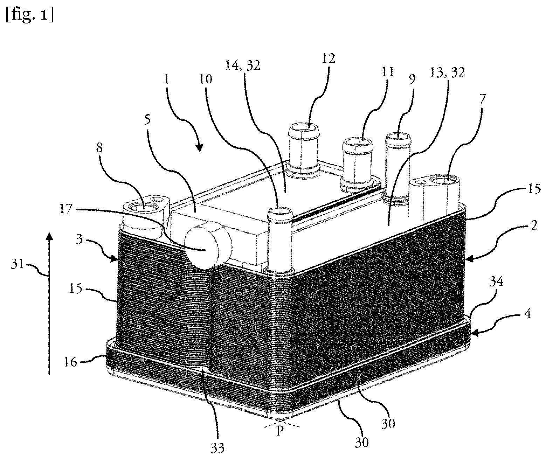

La figure 1 représente un premier mode de réalisation d'un module de traitement thermique 1 selon l'invention. Le module de traitement thermique 1 fait partie d'un système de traitement thermique d'un véhicule, ledit système pouvant simultanément assurer un traitement thermique d'un habitacle du véhicule et un traitement thermique de différents composants d'une chaine de traction du véhicule. Pour cela, le système de traitement thermique comporte au moins un circuit de fluide réfrigérant et au moins un circuit de liquide caloporteur, et le module de traitement thermique 1 comporte des portions de ces deux circuits. Le module de traitement thermique 1 est ainsi apte à assurer la circulation d'un fluide réfrigérant et d'un liquide caloporteur en son sein. A titre d'exemple, le fluide réfrigérant peut être un fluide de type R134a ou R1234yf et le liquide caloporteur peut être de l'eau glycolée.

Le module de traitement thermique 1 regroupe un premier échangeur thermique 2, un deuxième échangeur thermique 3 et un échangeur de chaleur interne 4, chacun assurant une fonction propre permettant le bon fonctionnement du système de traitement thermique du véhicule. Ainsi le premier échangeur thermique 2 et le deuxième échangeur thermique 3 sont configurés pour assurer un échange de chaleur entre le fluide réfrigérant et le liquide caloporteur, l'échange de chaleur au sein de chacun des échangeurs thermiques 2, 3 étant propre à une ou plusieurs fonctions du système de traitement thermique. L'échangeur de chaleur interne 4 assure un échange de chaleur intrinsèque au circuit de fluide réfrigérant, mais entre deux niveaux de température dudit fluide réfrigérant, à savoir à une première température et à une deuxième température. Les détails concernant la circulation du fluide réfrigérant et du liquide caloporteur ainsi que l'ensemble des échanges de chaleur se produisant au sein du module de traitement thermique 1 seront décrits par la suite.

Afin de faire entrer et sortir le fluide réfrigérant du module de traitement thermique 1, ce dernier comprend une entrée de fluide réfrigérant 7 et une sortie de fluide réfrigérant 8. Sur la figure 1, l'entrée de fluide réfrigérant 7 est positionnée au niveau du premier échangeur thermique 2 et la sortie de fluide réfrigérant 8 est positionnée au niveau du deuxième échangeur thermique 3, mais ces positions peuvent être diverses en fonction de la circulation du fluide réfrigérant au sein du module de traitement thermique 1.

Par ailleurs, le premier échangeur thermique 2 comprend une entrée de liquide caloporteur 9 et une sortie de liquide caloporteur 10, tandis que le deuxième échangeur thermique 3 comprend un orifice d'entrée 11 et un orifice de sortie 12. Contrairement au fluide réfrigérant, le liquide caloporteur entrant au sein de l'un des échangeurs thermiques 2, 3 ne circule qu'au sein dudit échangeur thermique 2, 3. Ainsi, le liquide caloporteur entrant respectivement via l'entrée de liquide caloporteur 9 ou l'orifice d'entrée 11 ressort nécessairement respectivement par la sortie de liquide caloporteur 10 ou l'orifice de sortie 12.

La particularité du module de traitement thermique 1 selon l'invention est qu'il comprend également un organe de détente 5 assurant la détente du fluide réfrigérant lorsque ce dernier traverse l'organe de détente 5. Tel que cela est représenté sur la figure 1, l'organe de détente 5 est solidaire mécaniquement du premier échangeur thermique 2 et du deuxième échangeur thermique 3. Une telle solidarisation de l'organe de détente 5 peut par exemple être effectuée par soudage ou par vissage. L'organe de détente 5 comprend une commande électronique 17 permettant de contrôler un niveau de détente du fluide réfrigérant au sein de l'organe de détente 5.

Chaque échangeur thermique 2, 3 comprend un bloc d'échange de chaleur 15 au sein duquel se déroule l'échange de chaleur entre le fluide réfrigérant et le liquide caloporteur. Le premier échangeur thermique 2 comprend une paroi supérieure 13 tandis que le deuxième échangeur thermique 3 comprend une face supérieure 14. La paroi supérieure 13 et la face supérieure 14 correspondent à la paroi et à la face opposées à l'échangeur de chaleur interne 4 par rapport au bloc d'échange de chaleur 15 respectif à chacun des échangeurs thermiques 2, 3. Selon ce premier mode de réalisation du module de traitement thermique 1, l'organe de détente 5 est solidaire de la paroi supérieure 13 du premier échangeur thermique 2 et de la face supérieure 14 du deuxième échangeur thermique 3.

Le premier échangeur thermique 2 et/ou le deuxième échangeur thermique 3 et/ou l'échangeur de chaleur interne 4 peuvent être des échangeurs à plaques. Sur la figure 1, les trois échangeurs 2, 3, 4 sont des échangeurs à plaques. Chacun de ces échangeurs à plaques comprend une pluralité de plaques 30 empilées les unes sur les autres selon un axe d'empilement 31. L'axe d'empilement 31 des échangeurs thermique 2, 3 et de l'échangeur de chaleur interne 4 sont parallèles ou sensiblement parallèles entre eux.

C'est l'empilement de plaques 30 qui permet la circulation du fluide réfrigérant, et du liquide caloporteur pour les échangeurs thermiques 2, 3, ces derniers circulant entre les plaques 30. Préférentiellement, la circulation entre le fluide réfrigérant et le liquide caloporteur pour les échangeurs thermiques 2, 3 et la circulation entre le fluide réfrigérant à la première température et le fluide réfrigérant à la deuxième température au sein de l'échangeur de chaleur interne 4 se fait de manière alternée d'une plaque 30 à une autre, et ce afin d'optimiser l'échange de chaleur.

Le premier échangeur thermique 2 et le deuxième échangeur thermique 3 comprennent chacun une première plaque terminale 32 et une deuxième plaque terminale 33, chacune correspondant aux plaques extrêmes de chacun des échangeurs thermiques 2, 3. Autrement dit, ces plaques terminales 32, 33 viennent refermer le bloc d'échange de chaleur 15 à chacune de ses extrémités. Sur la figure 1, la première plaque terminale 32 des deux échangeurs thermiques 2, 3 correspond à la plaque 30 opposée à l'échangeur de chaleur interne 4 par rapport au bloc d'échange de chaleur 15, tandis que la deuxième plaque terminale 33 des deux échangeurs thermiques 2, 3 correspond à la plaque 30 en regard de l'échangeur de chaleur interne 4. Selon le premier mode de réalisation de la figure 1, l'organe de détente 5 est donc solidaire de chacune des premières plaques terminales 32 de chacun des échangeurs thermiques 2, 3. L'échangeur de chaleur interne 4 comprend par ailleurs un corps 16 également formé par un empilement de plaques 30 et qui est fermé par une plaque d'extrémité 34 qui correspond à la plaque 30 agencée en regard des deux échangeurs thermiques 2, 3.

L'échangeur de chaleur interne 4 s'inscrit dans une projection P perpendiculaire à l'axe d'empilement 31 des plaques 30 dudit échangeur de chaleur interne 4. Il est à noter qu'une projection du premier échangeur thermique 2 et du deuxième échangeur thermique 3 sont compris dans la projection P de l'échangeur de chaleur interne 4. Un tel agencement permet d'améliorer la compacité du module de traitement thermique 1.

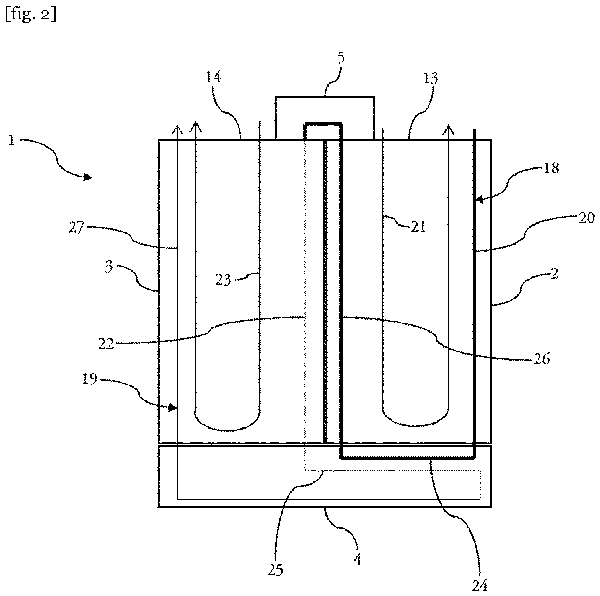

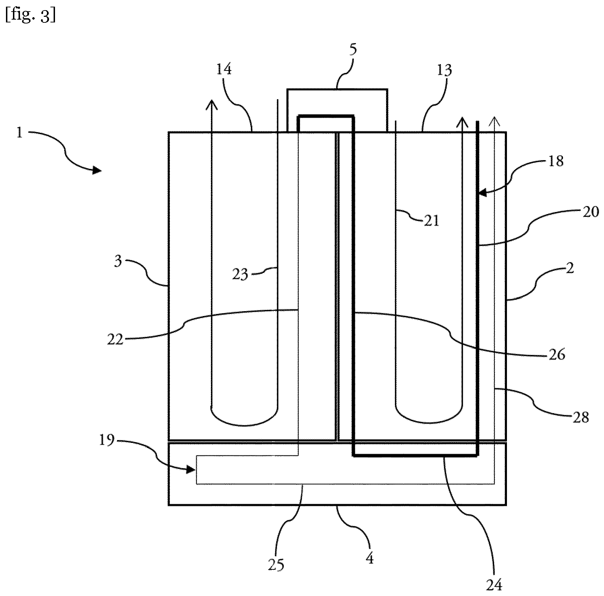

La figure 2 et la figure 3 représentent deux exemples de circulation du fluide réfrigérant et du liquide caloporteur au sein du premier mode de réalisation du module de traitement thermique 1. Pour ces deux figures, la circulation du fluide réfrigérant et du liquide caloporteur est représentée par des traits de différentes épaisseurs, les trais les plus épais correspondant à la circulation du fluide réfrigérant au sein d'une première section 18, les traits les plus fins correspondant à la circulation du fluide réfrigérant au sein d'une deuxième section 19 et les traits d'épaisseur intermédiaires correspondant à la circulation du liquide caloporteur.

Comme cela a été décrit précédemment, le fluide réfrigérant circule dans le module de traitement thermique 1 à deux températures différentes. Ainsi, le fluide réfrigérant circulant dans la première section 18 correspond au fluide réfrigérant à la première température, tandis que le fluide réfrigérant circulant dans la deuxième section 19 correspond au fluide réfrigérant à la deuxième température. L'organe de détente 5 sépare la première section 18 de la deuxième section 19 car en détendant le fluide réfrigérant, ce dernier bascule de la première température à la deuxième température, la première température étant supérieure à la deuxième température.

Selon le premier exemple de circulation illustré en figure 2, le fluide réfrigérant entre au sein du module de traitement thermique 1, plus particulièrement au sein d'une première passe 20 du premier échangeur thermique 2. C'est au niveau de cette première passe 20 que débute la première section 18, où le fluide réfrigérant est à la première température. De manière simultanée, le liquide caloporteur circule au sein d'une deuxième passe 21 du premier échangeur thermique 2. L'échange de chaleur se déroulant dans le premier échangeur thermique 2 se fait donc entre le fluide réfrigérant circulant dans la première passe 20 et le liquide caloporteur circulant dans la deuxième passe 21. Au sein du premier échangeur thermique 2, le fluide réfrigérant est à une température plus élevée que le liquide caloporteur. L'objectif de cet échange de chaleur est notamment de condenser le fluide réfrigérant via le liquide caloporteur, et ce afin de faciliter la détente de celui-ci via l'organe de détente 5. Cet échange de chaleur peut également servir à chauffer le liquide caloporteur dans le cadre d'une configuration de type pompe à chaleur indirecte si c'est le cas pour le système de traitement thermique associé.

Après avoir circulé au sein de la première passe 20, le fluide réfrigérant circule au sein de l'échangeur de chaleur interne 4 via un premier canal 24 afin d'opérer un échange de chaleur avec le fluide réfrigérant circulant dans la deuxième section 19. L'échange de chaleur opéré au sein de l'échangeur de chaleur interne 4 permet d'optimiser les performances thermiques du circuit de fluide réfrigérant.

Après avoir traversé le premier canal 24, le fluide réfrigérant retourne dans le premier échangeur thermique 2 et circule au sein d'une passe additionnelle 26. Cette passe additionnelle 26 permet de fluidiquement connecter la première passe 24 à l'organe de détente 5. Ainsi le fluide réfrigérant circulant dans la passe additionnelle 26 ne subit pas d'échange de chaleur malgré le fait qu'il traverse le premier échangeur thermique 2.

Le fluide réfrigérant rejoint ainsi l'organe de détente 5 qui, en détendant le fluide réfrigérant, effectue la transition entre la première section 18 et la deuxième section 19.

Le fluide réfrigérant sort de l'organe de détente 5 à la deuxième température et circule au sein d'un premier passage 22 agencé dans le deuxième échangeur thermique 3. De manière simultanée, le liquide caloporteur circule au sein d'un deuxième passage 23 du deuxième échangeur thermique 3. L'échange de chaleur se déroulant dans le deuxième échangeur thermique 3 se fait donc entre le fluide réfrigérant circulant dans le premier passage 22 et le liquide caloporteur circulant dans le deuxième passage 23. Au sein du deuxième échangeur thermique 3, le fluide réfrigérant est à une température plus faible que le liquide caloporteur. L'objectif de cet échange de chaleur est notamment de refroidir le liquide caloporteur via le fluide réfrigérant. Le liquide caloporteur ainsi refroidi permet par la suite de circuler jusqu'à un ou plusieurs éléments de la chaine de traction du véhicule et de traiter thermiquement ces derniers, ou jusqu'à un échangeur placé dans l'HVAC pour refroidir l'air de l'habitacle. Cet échange de chaleur permet également d'évaporer au moins partiellement le fluide réfrigérant afin d'optimiser les performances du circuit de fluide réfrigérant.

En sortie du premier passage 22, le fluide réfrigérant retourne dans l'échangeur de chaleur interne 4 mais cette fois via un deuxième canal 25. L'échange de chaleur se déroulant au sein de l'échangeur de chaleur interne 4 se fait donc entre le fluide réfrigérant circulant dans le premier canal 24 et le fluide réfrigérant circulant dans le deuxième canal 25.

Après avoir circulé au sein du deuxième canal 25, le fluide réfrigérant sort du module de traitement thermique 1 via le deuxième échangeur thermique 3, grâce à un passage additionnel 27. Tout comme pour la passe additionnelle 26, le fluide réfrigérant circulant dans le passage additionnel 27 ne subit pas d'échanges de chaleur et permet juste la sortie du fluide réfrigérant hors du module de traitement thermique 1. Ceci étant fait, le fluide réfrigérant peut par exemple circuler jusqu'à un dispositif de compression non représenté.

La figure 3 représente un deuxième exemple de circulation au sein du premier mode de réalisation du module de traitement thermique 1. Ce deuxième exemple de circulation ne diffère du premier exemple de circulation que par la sortie du fluide réfrigérant hors du module de traitement thermique 1 à partir du deuxième canal 25. Ainsi, au lieu de passer par le passage additionnel tel que cela est illustré sur la figure 2, le fluide réfrigérant repasse au sein du premier échangeur thermique 2 via une passe supplémentaire 28 au sein de laquelle, tout comme pour la passe additionnelle 26, aucun échange de chaleur n'y est opéré. Selon cet exemple, la sortie de fluide réfrigérant illustrée sur la figure 1 sur le deuxième échangeur thermique 3 doit être ici positionnée au niveau du premier échangeur thermique 2.

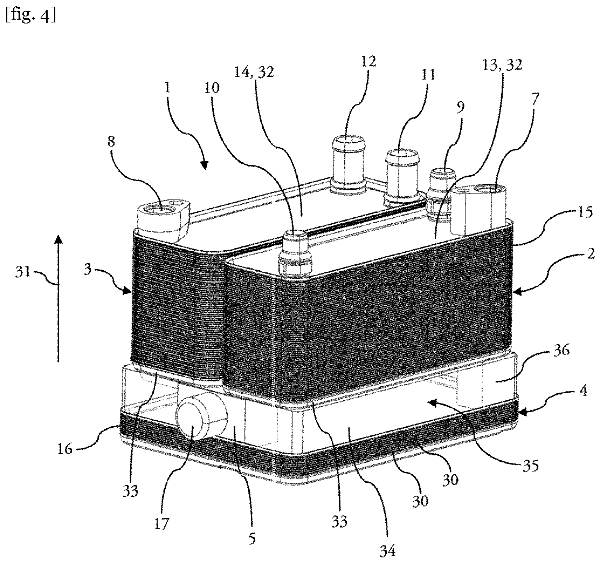

La figure 4 représente un deuxième mode de réalisation du module de traitement thermique 1. Ce deuxième mode de réalisation se distingue du premier mode de réalisation par la position de l'organe de détente 5. On se réfèrera donc à la description de la figure 1 pour tout ce qui concerne les caractéristiques communes aux deux modes de réalisation.

Le deuxième mode de réalisation se distingue du premier mode de réalisation en ce qu'il comprend un espace 35 séparant un ensemble formé par le premier échangeur thermique 2 et le deuxième échangeur thermique 3 et l'échangeur de chaleur interne 4. L'espace 35 permet de loger une pluralité d'éléments, notamment l'organe de détente 5 qui est donc ici interposé entre les deux échangeurs thermiques 2, 3 et l'échangeur de chaleur interne 4. Ainsi, selon ce deuxième mode de réalisation, l'organe de détente 5 est solidaire du premier échangeur thermique 2, du deuxième échangeur thermique 3 et de l'échangeur de chaleur interne 4, par exemple par soudage.

Il est également possible d'observer que l'espace 35 loge également un bloc de raccordement 36. Ce dernier assure une connexion fluidique entre le premier échangeur thermique 2 et l'échangeur de chaleur interne 4 et permet ainsi au fluide réfrigérant de traverser l'espace 35.

Selon le deuxième mode de réalisation, c'est avec la deuxième plaque terminale 33 du premier échangeur thermique 2 et du deuxième échangeur thermique 3 qu'est solidarisé l'organe de détente 5. Comme cela a été évoqué précédemment, la deuxième plaque terminale 33 correspond à la plaque 30 du premier échangeur thermique 2 et du deuxième échangeur thermique 3 agencée en regard de l'échangeur de chaleur interne 4. L'organe de détente 5 étant, selon ce mode de réalisation, au contact de l'échangeur de chaleur interne 4, ledit organe de détente 5 est donc solidaire de la plaque d'extrémité 34 dudit échangeur de chaleur interne 4.

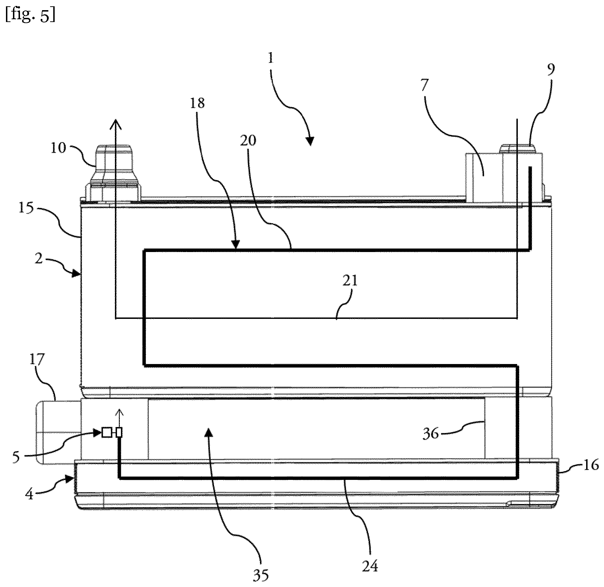

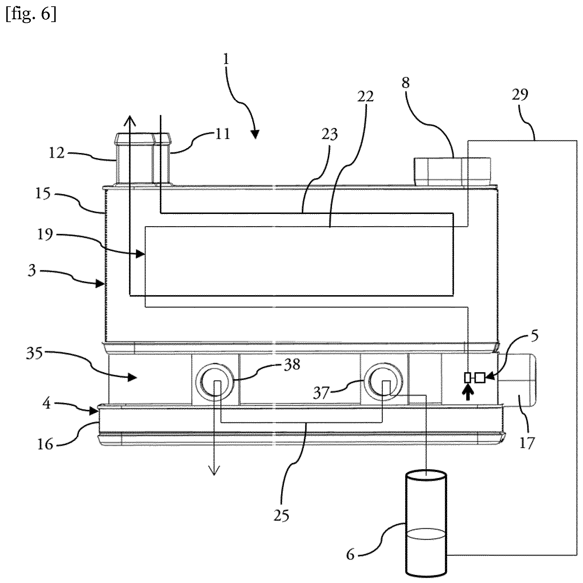

La figure 5 illustre schématiquement la circulation du fluide réfrigérant au sein de la première section 18, ainsi que la circulation du liquide caloporteur au sein du premier échangeur thermique 2. Tout comme pour les figures 2 et 3, les circulations des figures 5 et 6 sont représentées par des traits de différentes épaisseurs, les trais les plus épais correspondant à la circulation du fluide réfrigérant au sein de la première section 18, les traits les plus fins correspondant à la circulation du fluide réfrigérant au sein de la deuxième section 19 et les traits d'épaisseur intermédiaires correspondant à la circulation du liquide caloporteur.

Le fluide réfrigérant entre dans la première passe 20 du premier échangeur thermique 2 via l'entrée de fluide réfrigérant 7 tandis que le liquide caloporteur entre dans la deuxième passe 21 via l'entrée de liquide caloporteur 9. Tout comme pour le premier mode de réalisation, l'échange de chaleur opéré dans le premier échangeur thermique 2 se fait entre le fluide réfrigérant circulant dans la première passe 20 et le liquide caloporteur circulant dans la deuxième passe 21. Suite à cet échange de chaleur, le liquide caloporteur sort du premier échangeur thermique 2 via la sortie de liquide caloporteur 10.

Le fluide réfrigérant rejoint quant à lui le premier canal 24 de l'échangeur de chaleur interne 4 en passant par le bloc de raccordement 36 évoqué précédemment. Après avoir participé à l'échange de chaleur opéré au sein de l'échangeur de chaleur interne 4, le fluide réfrigérant peut alors directement rejoindre l'organe de détente 5. On comprend ainsi que le deuxième mode de réalisation du module de traitement thermique 1, et particulièrement la disposition de l'organe de détente 5, permet d'éviter de mettre en place la passe additionnelle, comme pour le premier mode de réalisation. L'organe de détente 5 permet ainsi une connexion fluidique directe entre le premier canal 24 de l'échangeur de chaleur interne 4 et le premier passage du deuxième échangeur thermique.

La figure 6 illustre la suite de la circulation du fluide réfrigérant, c'est-à-dire la deuxième section 19 du circuit de fluide réfrigérant, après que le fluide réfrigérant a été détendu par l'organe de détente 5. La figure 6 permet également d'illustrer que l'espace 35, en plus de loger l'organe de détente 5 et le bloc de raccordement, loge également un premier élément de raccordement 37 et un deuxième élément de raccordement 38 permettant au fluide réfrigérant d'accéder au deuxième canal 25 et d'en sortir depuis l'extérieur du module de traitement thermique 1. Le premier élément de raccordement 37 participe à la connexion fluidique entre le premier passage 22 et le deuxième canal 25 tel que cela sera décrit par la suite.

Après avoir été détendu par l'organe de détente 5, le fluide réfrigérant circule dans au sein du premier passage 22 du deuxième échangeur thermique 3. Le fluide réfrigérant étant à la deuxième température en circulant dans la deuxième section 19, celui-ci permet de refroidir le liquide caloporteur circulant dans le deuxième passage 23 après être entrée via l'orifice d'entrée 11 et avant de sortir via l'orifice de sortie 12.

Le fluide réfrigérant, après avoir été au moins partiellement évaporé lors de l'échange de chaleur opéré dans le deuxième échangeur thermique 3, sort de ce dernier via la sortie de fluide réfrigérant 8 et peut par exemple circuler au sein d'une conduite externe 29 jusqu'à rejoindre un dispositif d'accumulation 6, externe au module de traitement thermique 1. Le dispositif d'accumulation 6 est apte à contenir une fraction liquide de fluide réfrigérant qui n'a pas été évaporé lors de l'échange de chaleur opéré dans le deuxième échangeur thermique 3. Le dispositif d'accumulation 6 évite ainsi la circulation de fluide réfrigérant à l'état liquide jusqu'au dispositif de compression, qui n'est apte qu'à compresser un faible pourcentage d'huile et de fluide réfrigérant à l'état liquide mélangé au fluide réfrigérant à l'état gazeux.

Ainsi, seul un faible pourcentage d'huile de de fluide réfrigérant à l'état liquide mélangé au fluide réfrigérant à l'état gazeux sort du dispositif d'accumulation et circule jusqu'au premier élément de raccordement 37 afin de circuler dans le deuxième canal 25. Le premier élément de raccordement 37 assure donc indirectement la connexion entre le premier passage 22 et le deuxième canal 25. L'échange de chaleur opéré dans l'échangeur de chaleur interne 4 est effectué avec le fluide réfrigérant circulant dans la premier canal, tel qu'illustré sur la figure 5. Le fluide réfrigérant circulant dans le deuxième canal 25 sort ensuite par le deuxième élément de raccordement 38 afin de rejoindre le dispositif de compression, non illustré.

## Revendications

1. Module de traitement thermique (1) pour système de traitement thermique d'un véhicule, comprenant un premier échangeur thermique (2), un deuxième échangeur thermique (3) et un échangeur de chaleur interne (4), le premier échangeur thermique (2) et le deuxième échangeur thermique (3) étant tous deux configurés pour opérer un échange de chaleur entre un fluide réfrigérant et un liquide caloporteur, l'échangeur de chaleur interne (4) étant configuré pour opérer un échange de chaleur entre le fluide réfrigérant soumis dans le système de traitement thermique à deux niveaux de température différents, dans lequel le module de traitement thermique (1) comprend un organe de détente (5) au moins solidaire du premier échangeur thermique (2) et/ou du deuxième échangeur thermique (3) **caractérisé en ce que** le premier échangeur thermique (2) et le deuxième échangeur thermique (3) comprennent chacun un bloc d'échange de chaleur (15) au bout duquel est disposé une paroi supérieure (13) pour le premier échangeur thermique (2) et une face supérieure (14) pour le deuxième échangeur thermique (3), l'organe de détente (5) étant disposé au niveau de la paroi supérieure (13) du premier échangeur thermique (2) et/ou de la face supérieure (14) du deuxième échangeur thermique (3), la paroi supérieure (13) du premier échangeur thermique (2) et la face supérieure (14) du deuxième échangeur thermique (3) étant agencées à l'opposé de l'échangeur de chaleur interne (4) par rapport au bloc d'échange de chaleur (15) d'au moins l'un des échangeurs thermiques (2, 3).

2. Module de traitement thermique (1) selon la revendication 1, dans lequel le premier échangeur thermique (2) comprend une première passe (20) configurée pour être parcourue par le fluide réfrigérant et une deuxième passe (21) configurée pour être parcourue par le liquide caloporteur, le deuxième échangeur thermique (3) comprenant un premier passage (22) configuré pour être parcouru par le fluide réfrigérant et un deuxième passage (23) configuré pour être parcouru par le liquide caloporteur, l'échangeur de chaleur interne (4) comprenant un premier canal (24) configuré pour être parcouru par le fluide réfrigérant à une première température et un deuxième canal (25) configuré pour être parcouru par le fluide réfrigérant à une deuxième température différente de la première température.

3. Module de traitement thermique (1) selon la revendication précédente, dans lequel au moins la première passe (20) du premier échangeur thermique (2) et au moins le premier canal (24) de l'échangeur de chaleur interne (4) forment une première section (18) configurée pour faire circuler le fluide réfrigérant à la première température.

4. Module de traitement thermique (1) selon la revendication précédente, dans lequel au moins le premier passage (22) du deuxième échangeur thermique (3) et au moins le deuxième canal (25) de l'échangeur de chaleur interne (4) forment une deuxième section (19) configurée pour faire circuler le fluide réfrigérant à la deuxième température.

5. Module de traitement thermique (1) selon la revendication précédente, dans lequel l'organe de détente (5) sépare la première section (18) de la deuxième section (19) au sein du module de traitement thermique (1).

## Patentansprüche

1. Wärmebehandlungsmodul (1) für ein Wärmebehandlungssystem eines Fahrzeugs, umfassend einen ersten Wärmetauscher (2), einen zweiten Wärmetauscher (3) und einen internen Wärmetauscher (4), wobei der erste Wärmetauscher (2) und der zweite Wärmetauscher (3) beide so ausgelegt sind, dass sie einen Wärmeaustausch zwischen einem Kältemittel und einer Wärmeträgerflüssigkeit bewirken, wobei der interne Wärmetauscher (4) so ausgebildet ist, dass er einen Wärmeaustausch zwischen dem Kältemittelfluid bewirkt, das im Wärmebehandlungssystem zwei unterschiedlichen Temperaturniveaus ausgesetzt ist, wobei das Wärmebehandlungsmodul (1) eine Expansionsvorrichtung (5) umfasst, die zumindest integral mit dem ersten Wärmetauscher (2) und/oder dem zweiten Wärmetauscher (3) ausgebildet ist, **dadurch gekennzeichnet, dass** der erste Wärmetauscher (2) und der zweite Wärmetauscher (3) jeweils einen Wärmetauscherblock (15) umfassen, an dessen Ende eine obere Wand (13) für den ersten Wärmetauscher (2) und eine obere Fläche (14) für den zweiten Wärmetauscher (3) angeordnet sind, wobei die Expansionsvorrichtung (5) auf Höhe der oberen Wand (13) des ersten Wärmetauschers (2) und/oder der oberen Fläche (14) des zweiten Wärmetauschers (3) angeordnet ist, wobei die obere Wand (13) des ersten Wärmetauschers (2) und die obere Fläche (14) des zweiten Wärmetauschers (3) in Bezug auf den Wärmetauscherblock (15) mindestens eines der Wärmetauscher (2, 3) gegenüber dem internen Wärmetauscher (4) angeordnet sind.

2. Wärmebehandlungsmodul (1) nach Anspruch **1,** wobei der erste Wärmetauscher (2) einen ersten Durchgang (20), der konfiguriert ist, um vom Kältemittel durchlaufen zu werden, und einen zweiten Durchgang (21), der konfiguriert ist, um von der Wärmeträgerflüssigkeit durchlaufen zu werden, umfasst, wobei der zweite Wärmetauscher (3) einen ersten Kanal (22), der konfiguriert ist, um vom Kältemittel durchlaufen zu werden, und einen zweiten Kanal (23), der konfiguriert ist, um von der Wärmeträgerflüssigkeit durchlaufen zu werden, umfasst, wobei der interne Wärmetauscher (4) einen ersten Kanal (24), der konfiguriert ist, um vom Kältemittel bei einer ersten Temperatur durchlaufen zu werden, und einen zweiten Kanal (25), der konfiguriert ist, um vom Kältemittel bei einer zweiten Temperatur, die sich von der ersten Temperatur unterscheidet, durchlaufen zu werden, umfasst.

3. Wärmebehandlungsmodul (1) nach dem vorhergehenden Anspruch, wobei mindestens der erste Durchgang (20) des ersten Wärmetauschers (2) und mindestens der erste Kanal (24) des internen Wärmetauschers (4) einen ersten Abschnitt (18) bilden, der konfiguriert ist, um das Kältemittel bei der ersten Temperatur zirkulieren zu lassen.

4. Wärmebehandlungsmodul (1) nach dem vorhergehenden Anspruch, wobei mindestens der erste Kanal (22) des zweiten Wärmetauschers (3) und mindestens der zweite Kanal (25) des internen Wärmetauschers (4) einen zweiten Abschnitt (19) bilden, der konfiguriert ist, um das Kältemittel bei der zweiten Temperatur zirkulieren zu lassen.

5. Wärmebehandlungsmodul (1) nach dem vorhergehenden Anspruch, wobei das Entspannungsorgan (5) den ersten Abschnitt (18) vom zweiten Abschnitt (19) innerhalb des Wärmebehandlungsmoduls (1) trennt.

## Claims

1. Thermal treatment module (1) for a thermal treatment system of a vehicle, comprising a first heat exchanger (2), a second heat exchanger (3) and an internal heat exchanger (4), the first heat exchanger (2) and the second heat exchanger (3) both being configured to operate a heat exchange between a refrigerant fluid and a heat transfer liquid, the internal heat exchanger (4) being configured to operate a heat exchange between the refrigerant fluid subjected in the thermal treatment system to two different temperature levels, wherein the thermal treatment module (1) comprises an expansion device (5) at least integral with the first heat exchanger (2) and/or the second heat exchanger (3) **characterized in that** the first heat exchanger (2) and the second heat exchanger (3) each comprise a heat exchange block (15) at the end of which is arranged an upper wall (13) for the first heat exchanger (2) and an upper face (14) for the second heat exchanger (3), the expansion device (5) being arranged at the level of the upper wall (13) of the first heat exchanger (2) and/or the upper face (14) of the second heat exchanger (3), the upper wall (13) of the first heat exchanger (2) and the upper face (14) of the second heat exchanger (3) being arranged opposite to the internal heat exchanger (4) with respect to the heat exchange block (15) of at least one of the heat exchangers (2, 3).

2. Thermal treatment module (1) according to claim 1, wherein the first heat exchanger (2) comprises a first pass (20) configured to be traversed by the refrigerant fluid and a second pass (21) configured to be traversed by the heat transfer liquid, the second heat exchanger (3) comprising a first passage (22) configured to be traversed by the refrigerant fluid and a second passage (23) configured to be traversed by the heat transfer liquid, the internal heat exchanger (4) comprising a first channel (24) configured to be traversed by the refrigerant fluid at a first temperature and a second channel (25) configured to be traversed by the refrigerant fluid at a second temperature different from the first temperature.

3. Thermal treatment module (1) according to the preceding claim, wherein at least the first pass (20) of the first heat exchanger (2) and at least the first channel (24) of the internal heat exchanger (4) form a first section (18) configured to circulate the refrigerant fluid at the first temperature.

4. Thermal treatment module (1) according to the preceding claim, wherein at least the first passage (22) of the second heat exchanger (3) and at least the second channel (25) of the internal heat exchanger (4) form a second section (19) configured to circulate the refrigerant fluid at the second temperature.

5. Thermal treatment module (1) according to the preceding claim, wherein the expansion device (5) separates the first section (18) from the second section (19) within the thermal treatment module (1).
